(19) Europäisches Patentamt
European Patent Office
Office européen des brevets

(11) **EP 3 942 372 B1**

(12) **EUROPÄISCHE PATENTSCHRIFT**

(45) Veröffentlichungstag und Bekanntmachung des Hinweises auf die Patenterteilung:
**04.10.2023 Patentblatt 2023/40**

(21) Anmeldenummer: **20718240.3**

(22) Anmeldetag: **02.04.2020**

(51) Internationale Patentklassifikation (IPC):
**G05B 17/02** *(2006.01)*

(52) Gemeinsame Patentklassifikation (CPC):
**G05B 17/02**

(86) Internationale Anmeldenummer:
**PCT/EP2020/059360**

(87) Internationale Veröffentlichungsnummer:
**WO 2020/229051 (19.11.2020 Gazette 2020/47)**

(54) **VERFAHREN ZUR VALIDIERUNG VON SYSTEMPARAMETERN EINES ENERGIESYSTEMS, VERFAHREN ZUM BETRIEB EINES ENERGIESYSTEMS SOWIE ENERGIEMANAGEMENTSYSTEM FÜR EIN ENERGIESYSTEM**

METHOD FOR VALIDATING SYSTEM PARAMETERS OF AN ENERGY SYSTEM, METHOD FOR OPERATING AN ENERGY SYSTEM, AND ENERGY MANAGEMENT SYSTEM FOR AN ENERGY SYSTEM

PROCÉDÉ DE VALIDATION DE PARAMÈTRES DE SYSTÈME D'UN SYSTÈME ÉNERGÉTIQUE, PROCÉDÉ POUR FAIRE FONCTIONNER UN SYSTÈME ÉNERGÉTIQUE ET SYSTÈME DE GESTION D'ÉNERGIE POUR UN SYSTÈME ÉNERGÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2019 DE 102019207059**

(43) Veröffentlichungstag der Anmeldung:
**26.01.2022 Patentblatt 2022/04**

(73) Patentinhaber: **Siemens Aktiengesellschaft 80333 München (DE)**

(72) Erfinder:
• **AMTHOR, Arvid**
**98631 Grabfeld OT Nordheim (DE)**
• **DÖLLE, Oliver**
**91052 Erlangen (DE)**

(74) Vertreter: **Siemens Patent Attorneys Postfach 22 16 34 80506 München (DE)**

(56) Entgegenhaltungen:
**EP-A1- 1 788 461        EP-A2- 1 626 317
DE-A1- 19 841 165      DE-A1-102016 207 740
US-A1- 2007 244 575**

**Beschreibung**

Die Erfindung betrifft ein Verfahren gemäß dem Oberbegriff des Patentanspruches 1, ein Verfahren zum Betrieb (Betriebsverfahren) eines Energiesystems gemäß dem Oberbegriff des Patentanspruches 11 sowie ein Energiemanagementsystem gemäß dem Oberbegriff des Patentanspruches 15.

Eine effiziente Koordination von Energiewandlung, Energiespeicherung und/oder Energienutzung, insbesondere innerhalb multimodaler und/oder dezentraler Energiesysteme, ist typischerweise basierend auf einem heuristischen Betriebsverfahren nicht mehr möglich. Demnach ist ein Übergang zu modellbasierten Steuerungsansätzen beziehungsweise Regelungsansätzen vorteilhaft. Modellbasierte Betriebsverfahren erfordern jedoch, dass die Komponenten des Energiesystems (Systemkomponenten) und deren Verhalten mittels mathematischer Modelle, das heißt mittels einer Modellfunktion, charakterisiert beziehungsweise abgebildet werden.

Typischerweise sind zur Modellierung eine Komponente des Energiesystems mehrere Systemparameter erforderlich, die die Modellfunktion der Komponente parametrisieren. Diese Systemparameter müssen möglichst genau bestimmt werden, damit die Modellfunktion den tatsächlichen beziehungsweise realen Betrieb der Komponente bestmöglich beschreibt beziehungsweise abbildet. Typischerweise werden die Systemparameter manuell, das heißt offline, erfasst. Durch diese manuelle Identifikation der Systemparameter (Parameteridentifikation) erhöht sich jedoch der Aufwand signifikant, sodass dadurch die Kosten, insbesondere bei der Inbetriebnahme der Komponente, deutlich erhöht werden. Zudem ist die Fehleranfälligkeit manueller Parameteridentifikationen im Gegensatz zu automatisierten, das heißt online Parameteridentifikation, erhöht.

Aus dem Stand der Technik ist daher eine computergestützte automatisierte Identifikation von Systemparametern bekannt. Vorab werden hierbei Messwerte von Eingangsgrößen über einen festgelegten Wertebereich der Eingangsgrößen erfasst. In einem ersten Schritt der automatisierten Parameteridentifikation werden diese zu einem Messdatensatz aufbereitet. In einem zweiten Schritt der automatisierten Parameteridentifikation werden die Systemparameter mittels der aufbereiteten Messwerte, das heißt mittels des Messdatensatzes, identifiziert. In einem dritten Schritt der automatisierten Parameteridentifikation erfolgt eine Validierung der identifizierten Systemparameter. Die Validierung der Systemparameter (Beurteilung der Qualität der identifizierten Systemparameter) ist erforderlich, um die Korrektheit der Systemparameter und somit des Modells sicherzustellen.

Bei bekannten Parameteridentifikationen erfolgt die Validierung durch einen Abgleich des Modells mit Messdaten, wobei dieser Abgleich mittels des mittleren quadratischen Fehlers (englisch: Root-Mean-Squared Error; abgekürzt RMSE) durchgeführt wird. Dieses Verfahren ist insbesondere aus der offline Parameteridentifikation bekannt und wird dort typischerweise mit einer graphischen Auswertung durch den Anwender oder einer gezielten beziehungsweise individuellen Vorgabe von Eingangsgrößen durch Testbetriebe kombiniert.

Allerdings stellt diese bekannte Validierung nicht in allen relevanten Fällen, insbesondere im laufenden Betrieb der Komponente beziehungsweise des Energiesystems, eine robuste Validierung der identifizierten Systemparameter sicher.

Problematisch ist insbesondere, dass typischerweise die Messwerte der Eingangsgrößen nicht über den kompletten Arbeitsbereich der Komponente vorliegen und/oder die Messwerte beziehungsweise Messdaten eine Multikollinearität aufweisen. Mit anderen Worten werden die Messwerte der Eingangsgrößen innerhalb eines Wertebereiches erfasst, der typischerweise nicht zum gesamt möglichen Arbeitsbereich der Komponente beziehungsweise des Energiesystems korrespondiert. Dadurch kann zwar der RMSE im Bereich der erfassten Messwerte (Wertebereich) ausreichend minimiert werden, jedoch außerhalb dieses Wertebereiches und noch innerhalb des Arbeitsbereiches der Komponente kann der RMSE deutlich erhöht sein. Diese Erhöhung ist jedoch mittels bekannter Validierungen nicht erkennbar.

Mit anderen Worten ist der RMSE vom betrachteten Bereich der Eingangsgrößen (Wertebereich) abhängig, für welchen Messwerte der Eingangsgrößen erfasst wurden beziehungsweise den die Messwerte der Eingangsgröße abdecken beziehungsweise welcher durch den Messdatensatz abgedeckt ist. Dementsprechend ist eine robuste Validierung der Systemparameter bei bekannten automatisierten Parameteridentifikationen unter Verwendung bekannter Metriken (RMSE und/oder CVRMSE) nicht möglich. Dieser Effekt verstärkt sich in der Praxis bei komplexen Modellen mit einer höheren Anzahl an Systemparameter und/oder mehreren Einflussgrößen zusätzlich. Insbesondere für exogene Einflussgrößen besteht typischerweise kein direkter Stellzugriff auf die einzelnen exogenen Einflussgrößen, sodass diese nicht gezielt angeregt und somit erfasst werden können.

Ein weiteres bekanntes Verfahren, welches zur Validierung der Systemparameter verwendet wird, ist eine Kreuzvalidierung. Hierbei werden die erfassten Messdaten in Trainingsdaten und Testdaten eingeteilt. Allerdings sind ebenfalls bei diesem Verfahren Fehler in der Schätzung der Systemparameter (Parameteridentifikation) nicht erkennbar, wenn die erfassten Messdaten Multikollinearität und/oder vergleichbare Arbeitspunkte aufweisen.

Aus dem Stand der Technik ist weiterhin die Druckschrift DE 198 41 165 A1 bekannt. Darin wird ein Verfahren zur Bestimmung eines auf eine bestimmte technische Anlage abgestimmten und zur Prozeßdatenvalidierung einsetzbaren Prozeßdatenvalidierungsmodells offenbart. Dazu werden in einer Datenverarbeitungseinrichtung bereitgestellt: - eine Komponentenmodell-Bibliothek, die zu allen in der technischen Anlage vorhandenen Komponenten jeweils mehrere unterschiedliche methematische Komponentenmodelle enthält, - ein Konfidenzen-Datenspeicher, in dem zu Meßaufnehmern erfaßte Konfidenzen gespeichert sind, - ein Standard-Prozeßdatenvalidierungstool zur Durchführung von Validierungsläufen, und - ein Modellselektions- und Optimierungsmodul, das dafür eingerichtet ist, aus der Komponentenmodell-Bibliothek jeweils zur in der technischen Anlage vorhandenen Komponente das zugehörige Komponentenmodell abzurufen.

Eine genaue und sichere Validierung der Systemparameter ist somit entscheidend für einen effizienten Betrieb des Energiesystems, insbesondere im Rahmen einer modellprädikativen Regelung.

Der vorliegenden Erfindung liegt die Aufgabe zugrunde, ein verbessertes Verfahren zur Validierung von Systemparametern wenigstens einer Komponente eines Energiesystems bereitzustellen.

Die Aufgabe wird durch ein Verfahren mit den Merkmalen des unabhängigen Patentanspruches 1, durch ein Verfahren mit den Merkmalen des unabhängigen Patentanspruches 11 sowie durch ein Energiemanagementsystem mit den Merkmalen des unabhängigen Patentanspruches 15 gelöst. In den abhängigen Patentansprüchen sind vorteilhafte Ausgestaltungen und Weiterbildungen der Erfindung angegeben.

Das erfindungsgemäße computergestützte Verfahren zur Validierung von mittels Messdaten ermittelten Systemparametern für eine Modellfunktion $\eta$ wenigstens einer Komponente eines Energiesystems, wobei die Modellfunktion $\eta$ wenigstens eine Abhängigkeit wenigstens einer Ausgangsgröße der Komponente von wenigstens einer Eingangsgröße der Komponente unter Berücksichtigung der Systemparameter kennzeichnet, ist wenigstens durch die folgenden Schritte gekennzeichnet:

- Berechnen einer Standardabweichung der aus den Messdaten ermittelten Systemparameter;
- Berechnen einer Konfidenzschranke $ip$ in Abhängigkeit der berechneten Standardabweichung; und
- Festlegen der Systemparameter als valide, wenn der Quotient aus Konfidenzschranke $ip$ und Modellfunktion $\eta$ innerhalb eines für die Eingangsgröße festgelegten Wertebereiches kleiner gleich einem festgelegten Schwellenwert $\delta$ ist.

Gemäß der vorliegenden Erfindung erfolgt die Validierung der Systemparameter mittels der Konfidenzschranke. Dadurch wird vorteilhafterweise die Validierung der Systemparameter verbessert, sodass insbesondere das Energiesystem verbessert beziehungsweise effizienter betrieben werden kann, beispielsweise basierend auf einer modellprädikativen Regelung, die ein Verfahren gemäß der vorliegenden Erfindung und/oder einer ihrer Ausgestaltungen umfasst. Die Konfidenzschranke wird erfindungsgemäß in Abhängigkeit der Standardabweichung der Systemparameter berechnet. Die Systemparameter beziehungsweise ihre ermittelten Mittelwerte sind zur Parametrisierung der Modellfunktion vorgesehen.

Die Modellfunktion hängt typischerweise von mehreren Eingangsgrößen und mehreren Systemparametern ab und weist einen oder mehrere Ausgangsgrößen auf. Die Eingangsgrößen, die Ausgangsgrößen und die Systemparameter können jeweils zu einem Vektor, der vorliegend Fett notiert wird, zusammengefasst werden. Mit anderen Worten ist beispielsweise das Modell durch $Y = \eta(\theta,X)$ gekennzeichnet, wobei $X$ die Eingangsgrößen, $Y$ die Ausgangsgrößen, $\theta$ die Systemparameter und $\eta$ die Modellfunktion bezeichnet. Die Eingangsgrößen können weiterhin in exogene und endogene Eingangsgrößen eingeteilt werden. Eine typische Modellfunktion ist der Wirkungsgrad und/oder die Leistungszahl der Komponente, beispielsweise einer Energieumwandlungsanlage. Hierbei nimmt die Komponente Energieeingangsflüsse $p^{in}$ auf und wandelt diese in Energieausgangsflüsse $p^{out}$ um. Diese Energieumwandlung kann von den exogenen Eingangsgrößen $v$ und den Systemparametern $\theta$ abhängig sein. Mit anderen Worten kann $p^{out} = \eta(\theta,v,p^{in})$ oder beispielsweise $p^{out} = \eta(\theta,v) \cdot p^{in}$ sein, wobei $\eta(\theta,v)$ die Matrix der Wirkungsgrade und/oder Leistungszahlen für Umwandlungen eines bezüglich der Komponente eingehenden Energieflusses $p_i^{in}$ in einen bezüglich der Komponente ausgehenden Energieflusses $p_j^{out}$ kennzeichnet. Mit anderen Worten ist $p_i^{out} = \sum_j (\eta(\theta,v))_{ij} \cdot p_j^{in}$.

Im Rahmen der vorliegenden Erfindung umfasst der Begriff des Wirkungsgrades ebenfalls Leistungszahlen.

Beispiele für Energieumwandlungsanlagen sind Wärmepumpen, Kältemaschinen, Dieselgeneratoren, Blockheizkraftwerke, Photovoltaikanlagen, Windkraftanlagen, Biogasanlagen, Müllverbrennungsanlagen und/oder Sensoren, und/oder weitere Komponenten.

Die Systemparameter werden typischerweise mittels eines Messdatensatzes ermittelt. Mit anderen Worten kann das erfindungsgemäße Verfahren ein Teilschritt einer automatischen Parameteridentifikation sein. In einem ersten Schritt der automatischen Parameteridentifikation werden typischerweise vorab erfasste Messwerte, insbesondere bezüglich der Eingangsgröße, aufbereitet, insbesondere gefiltert. Dadurch wird ein Messdatensatz, insbesondere ein Trainingsdatensatz, bereitgestellt. Allerdings können im Rahmen der vorliegenden Erfindung die Messdaten ebenfalls synthetisch, beispielsweise mittels einer Simulation und/oder einer Prognose, erzeugt und bereitgestellt werden. Die Messdaten müssen somit nicht zwingend auf tatsächlich erfassten Messwerten basieren, sondern können wenigstens teilweise, insbesondere vollständig, synthetisch erzeugt worden sein. Die Messdaten können für einen Trainingsdatenbereich vorliegen, der insbesondere kleiner oder gleich dem Wertebereich der Eingangsgröße ist. Mit anderen Worten können die Messdaten in Trainingsdaten und weitere Messdaten (Testdaten) eingeteilt werden, wobei die Trainingsdaten zum Ermitteln der Systemparameter herangezogen werden. Die Messdaten können somit die Trainingsdaten sein oder diese wenigstens umfassen.

In einem zweiten Schritt der automatischen Parameteridentifikation werden die Systemparameter anhand der Messdaten identifiziert, das heißt ermittelt. Dies kann mittels eines allgemeinen Modellansatzes $y = f(\theta,x) + \varepsilon$ erfolgen, wobei die Grö-ßen $x,y$ nicht zwingend den realen Eingangsgrößen und Ausgangsgrößen entsprechen müssen. Mit anderen Worten kann eine geeignete Umformulierung des Modells $Y = \eta(\theta,X) + \varepsilon$ zu $y = f(\theta,x) + \varepsilon$ das Ermitteln der Systemparameter erleichtern, beispielsweise linearisieren. Hierbei bezeichnet $\varepsilon$ den jeweiligen Modellfehler, der typischerweise zum Identifizieren und/oder zum Ermitteln der Systemparameter möglichst minimiert wird.

Die vorliegende Erfindung betrifft einen dritten Schritt einer automatisierten Parameteridentifikation, das heißt eine Validierung der aus den Messdaten ermittelten Systemparameter. Mit anderen Worten umfasst der dritte Schritt einer erfindungsgemäßen automatisierten Parameteridentifikation ein Verfahren zur Validierung gemäß der vorliegenden Erfindung und/oder einer ihrer Ausgestaltungen.

Durch das beschriebene Vorgehen bei der automatisierten Parameteridentifikation werden die Systemparameter statistisch anhand der Messdaten ermittelt. Somit weisen die Systemparameter grundsätzlich eine Standardabweichung auf, die in einem ersten Schritt des erfindungsgemäßen Verfahrens berechnet oder ermittelt oder bestimmt wird. Die Standardabweichung quantifiziert hierbei wenigstens die Variation der ermittelten Systemparameter bezüglich eines tatsächlichen und/oder simulierten Betriebes der Komponente beziehungsweise des Energiesystems.

In einem zweiten Schritt des erfindungsgemäßen Verfahrens zur Validierung der Systemparameter wird die Konfidenzschranke in Abhängigkeit der berechneten Standardabweichung berechnet oder ermittelt oder bestimmt.

Grundsätzlich ist mittels der Konfidenzschranke $\psi$ ein Konfidenzintervall festlegbar. Ein Konfidenzintervall weist typischerweise eine untere und obere Konfidenzschranke auf. Die obere und untere Konfidenzschranke können betragsmäßig gleich sein, sodass das Konfidenzintervall die Breite $2\psi$ aufweist. Das Konfidenzintervall der Modellfunktion ist somit beispielsweise durch $[\eta(\theta,X) - \psi(\theta,X), \eta(\theta,X) + \psi(\theta,X)]$ festlegt. Ist die Modellfunktion insbesondere der Wirkungsgrad der Komponente, der von den Systemparametern $\theta$, den exogenen Eingangsgrößen $v$ und den Energieeingangsflüssen $p_{in}$ abhängig ist, das heißt es gilt $p^{out} = \eta(\theta,v,p^{in})$, so kann das Konfidenzintervall zu $[\eta(\theta,v,p^{in}) - \psi(\theta,v,p^{in}), \eta(\theta,v,p^{in}) + \psi(\theta,v,p^{in})]$ präzisiert werden. Grundsätzlich ist die Konfidenzschranke somit ebenfalls eine Funktion der Systemparameter, der endogenen und/oder exogenen Eingangsgrößen und/oder der Varianzen sowie Kovarianzen der Systemparameter.

Das Konfidenzintervall beziehungsweise die Konfidenzschranke korrespondiert zum Informationsgehalt der Messdaten für die Modellfunktion. Demnach ist die Konfidenzschranke beziehungsweise das Konfidenzintervall betragsmäßig umso kleiner, je größer die Varianz der Eingangsgrößen, insbesondere der exogenen Eingangsgrößen, ist. Die Konfidenzschranke beziehungsweise das Konfidenzintervall ist weiterhin betragsmäßig umso kleiner, je besser der Fit bezüglich der Parameteridentifikation (Regression) ist, je geringer die Korrelationen zwischen den Eingangsgrößen ist, und/oder je größer der Abstand zwischen dem Wert von $v$ beziehungsweise $p^{in}$ vom Mittelwert von den Trainingsdaten ist, und/oder je größer die Anzahl der vorliegenden Trainingsdaten ist.

In einem dritten Schritt des erfindungsgemäßen Verfahrens werden die Systemparameter als valide festgelegt, wenn der Quotient aus der berechneten Konfidenzschranke und Modellfunktion innerhalb des für die Eingangsgröße festgelegten Wertebereiches kleiner oder gleich dem festgelegten Schwellenwert ist.

Mit anderen Worten wird durch den Quotienten und den Schwellenwert die relative Unsicherheit bezüglich der Systemparameter festgelegt. Der Schwellenwert kann je nach erforderlicher Sicherheit beziehungsweise Genauigkeit festgelegt werden. Somit korrespondiert der Schwellenwert zu einer maximalen relativen Unsicherheit, die die Systemparameter aufweisen dürfen. Hierbei ist zu beachten, dass der Quotient aus Konfidenzschranke und Modellfunktion ebenfalls eine Funktion bezüglich der Eingangsgrößen ist. Beispielsweise wird der Quotient durch $\psi(\theta,v,p_{in})/\eta(\theta,v,p_{in})$ ausgebildet, und ist demnach ebenfalls eine Funktion der endogenen und/oder exogenen Eingangsgrößen sowie der Systemparameter. Die Systemparameter sind hierbei valide, wenn $\psi(\theta,v,p_{in})/\eta(\theta,v,p_{in}) < \delta$ oder äquivalent $\psi(\theta,v,p_{in}) < \delta \cdot \eta(\theta,v,p_{in})$ ist. Weiterhin sind alle zur Ungleichung $\psi(\theta,v,p_{in})/\eta(\theta,v,p_{in}) < \delta$ mathematisch äquivalenten Umformulierungen ebenfalls Teil der vorliegenden Erfindung.

Die vorliegende Erfindung stellt somit eine Validierung der Systemparameter in Abhängigkeit der relativen Unsicherheit der Systemparameter bereit. Hierbei basiert die relative Unsicherheit vorteilhafterweise auf statistischen Erwägungen, vorliegend im Wesentlichen auf der Konfidenzschranke beziehungsweise dem Quotienten der Konfidenzschranke und der Modellfunktion. Grundsätzlich ist die Unsicherheit über die tatsächlich vorliegenden Systemparameter beziehungsweise deren Werte größer, je größer die Konfidenzschranke betragsmäßig ist. Mit anderen Worten gilt typischerweise, dass je breiter das Konfidenzintervall ist, desto größer ist die Unsicherheit über die tatsächlich vorliegenden Systemparameter. Über den Schwellenwert kann dann die erforderliche oder gewünschte Genauigkeit/Sicherheit festgelegt werden. Je kleiner der Schwellenwert desto kleiner ist die Unsicherheit und desto größer die Genauigkeit/Sicherheit bezüglich der Systemparameter.

Die vorliegende Erfindung ermöglicht somit eine robuste Qualitätseinschätzung des Modells über den gesamten beziehungsweise kompletten Arbeitsbereich der Komponente, auch wenn keine Messdaten über diesen kompletten Arbeitsbereich vorliegen. Mit anderen Worten ermöglicht die vorliegende Erfindung eine sinnvolle und statistisch belastbare Extrapolation vom zur Identifikation der Systemparameter festgelegten beziehungsweise betrachteten Wertebereich der Eingangsgrößen auf den gesamten beziehungsweise kompletten Arbeitsbereich der Komponente.

Weiterhin sind erforderliche Angaben, beispielsweise Grenzen des Arbeitsbereiches, Grenzen für die Breite des Konfidenzintervall sowie Grenzen für den Wirkungsgrad, wie in der vorliegenden Erfindung verwendet, physikalisch gut interpretierbar. Dies ist insbesondere bei einer Qualitätsbeurteilung von Gray-Box-Modellen und/oder Black-Box-Modellen vorteilhaft, da bei diesen eine physikalische Interpretation der einzelnen identifizierten Systemparameter typischerweise schwierig oder nicht möglich ist.

Bei dem erfindungsgemäßen Verfahren zum Betrieb eines Energiesystems wird das Energiesystem wenigstens teilweise mittels einer modellprädikativen Regelung basierend auf wenigstens einer Modellfunktion wenigstens einer Komponente des Energiesystems geregelt. Das erfindungsgemäße Verfahren zum Betrieb eines Energiesystems ist gekennzeichnet dadurch, dass der modellprädikativen Regelung zugrundeliegende Systemparameter der Modellfunktion mittels eines Verfahrens zur Validierung gemäß der vorliegenden Erfindung und/oder einer ihrer Ausgestaltungen als valide für die Regelung festgelegt werden.

Vorteilhafterweise basiert die modellprädikative Regelung auf den Wertbereich der Eingangsgröße, der typischerweise kleiner als der Arbeitsbereich der Komponente ist. Dadurch wird das Konfidenzintervall beziehungsweise die Modellfunktion auf den Arbeitsbereich extrapolierbar. Ein Berücksichtigen des Arbeitsbereiches, falls überhaupt möglich, ist durch die erfindungsgemäße Verwendung der Konfidenzschranke beziehungsweise des Konfidenzintervalls nicht erforderlich.

Die Systemparameter werden zwar lediglich mittels der Werte der Eingangsgrößen innerhalb des Wertebereiches identifiziert, diese können jedoch aufgrund der erfindungsgemäßen Validierung auf den größeren Arbeitsbereich statistisch quantifizierbar extrapoliert werden. Mit anderen Worten kann ermittelt werden, ob das Modell beziehungsweise die modellprädikative Regelung ebenfalls für Bereiche außerhalb des für die Ermittlung der Systemparameter berücksichtigten Wertebereiches beziehungsweise Wertebereiche valide ist.

Es ergeben sich zum erfindungsgemäßen Verfahren zur Validierung gleichartige und gleichwertige Vorteile und Ausgestaltungen des erfindungsgemäßen Verfahrens zum Betrieb des Energiesystems.

Weiterhin umfasst eine erfindungsgemäße modellprädikative Regelung ein Verfahren zur Validierung gemäß der vorliegenden Erfindung und/oder einer ihrer Ausgestaltungen.

Eine erfindungsgemäße Parameteridentifikation umfasst ein Verfahren zur Validierung gemäß der vorliegenden Erfindung und/oder einer ihrer Ausgestaltungen.

Das erfindungsgemäße Energiemanagementsystem für ein Energiesystem umfasst eine Messeinheit und eine Recheneinheit, wobei mittels der Messeinheit mehrere Messwerte bezüglich Systemparametern wenigstens einer Komponente des Energiesystems erfassbar sind und die zugehörigen Messdaten bereitstellbar sind. Erfindungsgemäß ist die Recheneinheit zur Durchführung eines Verfahrens gemäß einem der vorhergehenden Ansprüche ausgebildet.

Insbesondere umfasst die Recheneinheit einen Computer, einen Quantencomputer, einen Server, einen Cloud-Server und/oder sonstiges verteilte Netz- und/oder Rechensysteme.

Es ergeben sich zum erfindungsgemäßen Verfahren zur Validierung gleichartige und gleichwertige Vorteile und Ausgestaltungen des erfindungsgemäßen Energiemanagementsystems.

Gemäß einer vorteilhaften Ausgestaltung der Erfindung wird der Wertebereich kleiner als ein Arbeitsbereich der Komponente festgelegt.

Typischerweise ist der Arbeitsbereich der Komponente bezüglich der Eingangsgröße durch die Werte der Eingangsgröße gekennzeichnet, die die Eingangsgröße im Betrieb der Komponente annimmt oder annehmen kann. Der Wertebereich, der für die Validierung gemäß der vorliegenden Erfindung herangezogen wird, ist bevorzugt kleiner. Beispielsweise ist aus einer Simulation beziehungsweise Prognose bekannt, dass in den kommenden zwei Wochen die Temperatur zwischen 5 Grad Celsius und 10 Grad Celsius liegt. Bevorzugt wird nun als Wertebereich für die Temperatur (exogene Eingangsgröße) der Bereich von 5 Grad Celsius bis 10 Grad Celsius herangezogen. Die Komponente kann jedoch für einen Arbeitsbereich von -10 Grad Celsius bis 30 Grad Celsius ausgelegt sein, sodass der Wertebereich, der für die Validierung herangezogen wird, kleiner ist. Dadurch kann vorteilhafterweise die Identifikationszeit der Systemparameter deutlich verkürzt werden. Weiterhin wird die Zeit bis das Modell beziehungsweise die Systemparameter als valide erkannt werden vorteilhafterweise ebenfalls verkürzt.

In einer vorteilhaften Weiterbildung der Erfindung wird die Standardabweichung mittels einer Kovarianzmatrix $\Sigma_\theta$ der aus den Messdaten ermittelten Systemparameter berechnet.

Dadurch werden vorteilhafterweise Korrelationen zwischen den einzelnen Systemparametern berücksichtigt. Die Kovarianzmatrix entspricht dem Kehrwert der Fisher-Informationsmatrix, sodass diese vorteilhafterweise direkte Rückschlüsse auf den Informationsgehalt der Messdaten ermöglicht. Mit anderen Worten wird vorteilhafterweise im Gegensatz zu bekannten Verfahren, wie beispielsweise RMSE und/oder CVRMSE, der Informationsgehalt der Messdaten beziehungsweise Messwerte bei der Validierung berücksichtigt.

Besonders bevorzugt wird die Kovarianzmatrix mittels $\Sigma_\theta = \mathbf{E}[(\theta - \mathbf{E}(\theta)) \cdot (\theta - \mathbf{E}(\theta))^\mathsf{T}]$ berechnet, wobei $\theta$ den Vektor der Systemparameter und $\mathbf{E}$ den Erwartungswert kennzeichnet.

Vorteilhafterweise werden dadurch die Varianzen und Korrelationen beziehungsweise Kovarianzen zwischen den Systemparametern mittels einer gemeinsamen Matrix berechnet und dargestellt. Somit gilt für die Kovarianzmatrix beziehungsweise ihre Komponenten $(\Sigma_\theta)_{ij} = \mathrm{Cov}(\theta_i, \theta_j)$ für $i \neq j$ und $(\Sigma_\theta)_{ii} = \mathrm{Var}(\theta_i)$, für jeweils $i,j = 1,...,n$ und $\theta = (\theta_1,...,\theta_n)^\mathsf{T}$.

Werden die Systemparameter mittels der Methode der kleinsten Quadrate identifiziert (zweiter Schritt der automatisierten Parameteridentifikation) und liegt Homoskedastizität und keine Autokorrelation für den Modellfehler $\varepsilon$ vor, so ist beispielsweise $\Sigma_\theta = \sigma^2(\theta^\mathsf{T}\theta)^{-1}$, wobei $\sigma$ die Standardabweichung beziehungsweise $\sigma^2$ die Varianz bezeichnet. In diesem Fall wird die Varianz der Grundgesamtheit $\sigma^2$ mittels des Modellfehlers $\varepsilon$ sowie der Anzahl der Messpunkte $k$ aus der vorhandenen Stichprobe mittels $\sigma^2 = \varepsilon^\mathsf{T}\varepsilon/(k - n)$ geschätzt. In der Literatur werden Schätzer beziehungsweise Schätzfunktionen, beispielsweise für die Systemparameter, Varianzen und/oder Kovarianz, ebenfalls mit einem Hut gekennzeichnet, sodass beispielsweise auch $\hat{\sigma}^2 = \hat{\varepsilon}^\mathsf{T}\hat{\varepsilon}/(k - n)$ geschrieben kann.

Gemäß einer vorteilhaften Ausgestaltung der Erfindung wird die Standardabweichung mittels

$$\sigma_\eta = \sqrt{(\nabla_\theta \eta)^\mathsf{T} \cdot \Sigma_\theta \cdot \nabla_\theta \eta}$$ berechnet, wobei $\eta$ die Modellfunktion bezeichnet.

Vorteilhafterweise wird dadurch die Validierung der Systemparameter verbessert. Das ist deshalb der Fall, da die Standardabweichung hierdurch mit den Methoden der Fehlerfortpflanzung berechnet wird. Ist die Modellfunktion der

Wirkungsgrad, so ist $$\sigma_\eta = \sigma_\eta(\theta, v, p_{\mathrm{in}}) = \sqrt{(\nabla_\theta \eta(\theta, v, p_{\mathrm{in}}))^\mathsf{T} \cdot \Sigma_\theta \cdot \nabla_\theta \eta(\theta, v, p_{\mathrm{in}})}$$ . Hierbei bezeichnet $\nabla_\theta \eta$ den Gradienten der Modellfunktion unter Vernachlässigung von Messunsicherheiten bezüglich der Systemparameter $\theta$. Mit anderen Worten ist $\nabla_\theta \eta = (\partial_{\theta_1}\eta,...,\partial_{\theta_n}\eta)^\mathsf{T}$, wobei $\partial_{\theta_i}\eta$ die partielle Ableitung der Modellfunktion nach dem Systemparameter $\theta_i$ bezeichnet.

In einer vorteilhaften Weiterbildung der Erfindung wird die Konfidenzschranke mittels des Produktes eines Wertes der studentschen t-Verteilung und der Standardabweichung berechnet.

Bevorzugt wird hierbei die Konfidenzschranke mittels $\psi = K \cdot t_{1-\alpha/2} \cdot \sigma_\eta$ berechnet wird, wobei $t_{1-\alpha/2}$ den Wert der studentschen t-Verteilung zu einem Signifikanzniveau $\alpha$ bezeichnet und $K$ eine Konstante größer Null ist. Besonders bevorzugt ist $K = 1$, sodass $\psi = t_{1-\alpha/2} \cdot \sigma_\eta$ ist, wobei $\alpha$ das Signifikanzniveau und $(1 - \alpha)$ das Konfidenzniveau unter Berücksichtigung des vorliegenden Freiheitsgrades $(k - n)$ bezeichnet. Beispielsweise ist $(1 - \alpha) = 0.95$, das heißt 95 Prozent. Das entsprechende Konfidenzintervall ist somit bevorzugt durch $[\eta(\theta, v, p_{\mathrm{in}}) - t_{1-\alpha/2} \cdot \sigma_\eta(\theta, v, p_{\mathrm{in}}), \eta(\theta, v, p_{\mathrm{in}}) + t_{1-\alpha/2} \cdot \sigma_\eta(\theta, v, p_{\mathrm{in}})]$ festgelegt.

Gemäß einer vorteilhaften Ausgestaltung der Erfindung werden die Systemparameter als valide festgelegt, falls $\psi/\eta \leq \delta$ ist, wobei $\delta$ den festgelegten Schwellenwert bezeichnet.

Hierbei ist zu beachten, dass der Quotient $\psi/\eta$ eine Funktion der Eingangsgrößen $X$ ist, sodass die Systemparameter $\theta$ als valide festgelegt werden, wenn $\psi(\theta, X)/\eta(\theta, X) < \delta$ ist. Bevorzugt wird die Konfidenzschranke $\psi$ mittels der studentschen t-Verteilung ermittelt beziehungsweise berechnet und die Modellfunktion entspricht dem Wirkungsrad und/oder der Leistungszahl der Komponente, sodass die Systemparameter in diesem Fall als valide festgelegt werden, wenn $\psi(\theta, v, p_{\mathrm{in}}, t_{1-\alpha/2})/\eta(\theta, v, p_{\mathrm{in}}) < \delta$ beziehungsweise $\psi(\theta, v, p_{\mathrm{in}}, t_{1-\alpha/2}) < \delta \cdot \eta(\theta, v, p_{\mathrm{in}})$ ist.

Äquivalent hierzu kann das Kleiner-Zeichen in $\psi(\theta, v, p_{\mathrm{in}}, t_{1-\alpha/2}) < \delta \cdot \eta(\theta, v, p_{\mathrm{in}})$ durch das Kleiner-Gleich-Zeichnen ersetzt werden, das heißt die Systemparametzer sind valide, wenn $\psi(\theta, v, p_{\mathrm{in}}, t_{1-\alpha/2}) \leq \delta \cdot \eta(\theta, v, p_{\mathrm{in}})$ ist. Im Sinne der vorliegenden Erfindung sind die beiden Formulierungen äquivalent. Die Konfidenzschranke hängt ebenfalls vom Signifikanzniveau $\alpha$ ab. Beispielsweise wird der Schwellenwert $\delta$ und das Signifikanzniveau derart festgelegt, dass die Breite des 95 Prozent Konfidenzintervalls lediglich 15 Prozent des jeweils am Arbeitspunkt vorliegenden Wirkungsgrades beträgt.

Bevorzugt wird der Schwellenwert $\delta$ zwischen 0 und 0.1 festgelegt.

Mit anderen Worten ist $\delta \in [0,0.1]$. Dadurch wird vorteilhafterweise die Validierung der Systemparameter verbessert.

In einer vorteilhaften Weiterbildung der Erfindung werden zur Validierung der Systemparameter Nebenbedingungen der Systemparameter und/oder Nebenbedingungen der Modellfunktion berücksichtigt.

Vorteilhafterweise können - im Gegensatz zu sogenannten Black-Box-Modellen - die Wirkungsgrade und/oder gegebenenfalls die Systemparameter überprüft beziehungsweise auf Plausibilität getestet werden. Eine solche Nebenbedingung für den Wirkungsgrad (Modellfunktion) ist beispielsweise, dass dieser unterhalb des für den Prozess theoretisch möglichen Carnot-Wirkungsgrades ist. Weitere Plausibilitätstests können vorgesehen sein, insbesondere können positive und negative Grenzen für die einzelnen Komponenten des Energiesystems festgelegt werden, die der Wirkungsgrad und/oder das Konfidenzintervall über den kompletten Arbeitsbereich aller Eingangsgrößen nicht überschreiten darf. So sollten identifizierte Systemparameter nicht verwendet werden, wenn der Wirkungsgrad an bestimmten Arbeitspunkten beispielsweise einen Wert kleiner als Null annimmt. Solche Nebenbedingungen können sich ebenfalls aus dem technischen Datenblatt der Komponente ergeben.

Gemäß einer vorteilhaften Ausgestaltung werden die Systemparameter aus Messdaten, insbesondere Trainingsdaten, des Energiesystems ermittelt.

Hierbei werden bevorzugt die Messdaten automatisiert basierend auf erfassten Messwerten ermittelt. Alternativ oder ergänzend werden die Messdaten synthetisch erzeugt und bereitgestellt, beispielsweise mittels einer Simulation und/oder einer Prognose.

Insgesamt wird vorteilhafterweise dadurch im Wesentlichen eine automatisierte Parameteridentifikation bereitgestellt.

Hierbei ist es besonders bevorzugt, wenn die Messwerte zum Ermitteln der Messdaten aufbereitet, insbesondere gefiltert werden. Insbesondere werden diese in Trainingsdaten und weitere Messdaten eingeteilt.

Vorteilhafterweise wird dadurch die Genauigkeit der Ermittlung der Systemparameter und deren Validierung verbessert. Insgesamt werden dadurch die automatisierte Parameteridentifikation und die modellprädikative Regelung verbessert.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1     ein Ablaufdiagramm einer erfindungsgemäßen automatisierten Parameteridentifikation; und

Figur 2     ein Diagramm zur Verdeutlichung einer Konfidenzschranke beziehungsweise eines Konfidenzintervalls am Beispiel einer Eingangsgröße.

Gleichartige, gleichwertige und/oder gleichwirkende Elemente können in einer der Figuren oder in den Figuren mit denselben Bezugszeichen versehen sein.

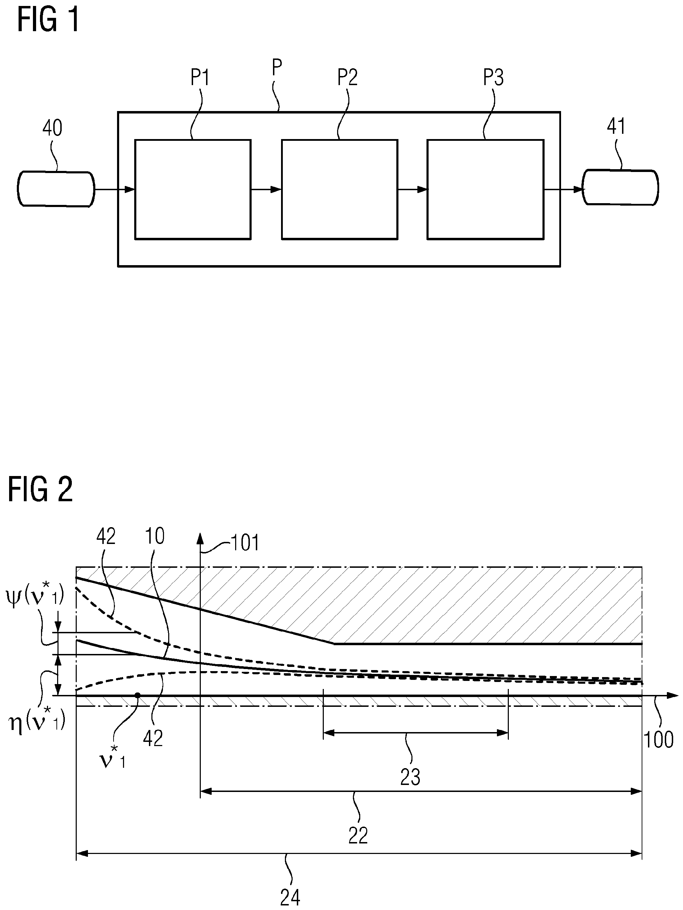

Die Figur 1 zeigt eine erfindungsgemäße Parameteridentifikation P, die ein erfindungsgemäßes computergestütztes Verfahren zur Validierung von Systemparametern als Schritt beziehungsweise Teilschritt umfasst.

Die erfindungsgemäße Parameteridentifikation P kann Teil einer modellprädikativen Regelung eines Energiesystems sein, sodass diesbezüglich ebenfalls von einer Validierung des Modells, welches im Wesentlichen durch eine Modellfunktion repräsentiert wird, gesprochen werden kann.

Das Energiesystem wird somit beispielsweise, insbesondere wenigstens eine seiner Komponenten, mittels einer modellprädikativen Regelung wenigstens teilweise geregelt, wobei zur Regelung die Modellfunktion vorgesehen ist, die typischerweise mehrere Systemparameter aufweist. Mit anderen ist eine Parametrisierung des Modells erforderlich, das heißt die Werte beziehungsweise die Systemparameter müssen identifiziert und/oder bestimmt und/oder ermittelt werden, damit das Modell für die Regelung des Energiesystems beziehungsweise seines Betriebs verwendet werden kann.

Weiterhin hängt die Modellfunktion von einer oder mehreren Eingangsgrößen, beispielsweise einer elektrischen und/oder thermischen Leistung/Energie ab, und quantifiziert die Abhängigkeit einer oder mehrerer Ausgangsgrößen der Komponente, beispielsweise eine elektrische und/oder thermische Leistung/Energie, in Abhängigkeit der Eingangsgrößen. Die Systemparameter parametrisieren diese Abhängigkeit. Insbesondere sind exogene Eingangsgrößen eine Temperatur, beispielsweise eine Außentemperatur, ein Druck, eine Windgeschwindigkeit, und/oder weitere physikalische Größen. Die Systemparameter parametrisieren die Modellfunktion. Typischerweise treten diese in der Modellfunktion zusammen mit einer der Eingangsgrößen auf, beispielsweise in Form eines Produktes aus Systemparameter und Eingangsgröße. Typischerweise haben die Systemparameter keine unmittelbare physikalische Interpretation. Allerdings können diese beispielsweise zu thermischen Verlusten (Wärmeverluste) und/oder thermischen Widerständen korrespondieren. Beispielsweise ist $p^{out} = \eta(\theta, v) \cdot p^{in}$ mit $\eta(\theta, v) = \theta_1 T_{ambient} + \theta_2(v^2 - 2p/\rho) + \theta_3 p^{in}$, wobei v eine Windgeschwindigkeit, $p$ einen Druck, $\rho$ eine Dichte und $T_{ambient}$ eine Außentemperatur bezeichnet.

Die automatisierte Parameteridentifikation P umfasst einen ersten Schritt P1, einen zweiten Schritt P2 und einen dritten Schritt P3.

Im ersten Schritt P1 werden erfasste und/oder synthetisch erzeugte Messwerte 40, beispielsweise die Temperatur einer Komponente des Energiesystems, zu einem Messdatensatz aufbereitet, insbesondere gefiltert.

Im zweiten Schritt P2 werden die Systemparameter 41 des Modells beziehungsweise der Modellfunktion mittels des im ersten Schritt P1 ermittelten Messdatensatzes identifiziert.

Im dritten Schritt P3 erfolgt eine Validierung der im zweiten Schritt P2 identifizierten Systemparameter 41. Die Validierung erfolgt gemäß der dargestellten Ausgestaltung der Erfindung mittels eines erfindungsgemäßen Validierungsverfahrens (Verfahren zur Validierung). Mit anderen Worten werden die identifizierten Systemparameter 41 bezüglich ihres Informationsgehaltes analysiert. Dies wird erfindungsgemäß durch das Berechnen und Verwenden der Konfidenzschranke beziehungsweise des Konfidenzintervalls ermöglicht. Vorteilhafterweise ermöglicht dies, dass die Identifikation, Bestimmung und/oder Ermittlung der Systemparameter 41 auf einem kleineren Wertebereich der Eingangsgrößen erfolgen kann, aber dennoch eine Aussage über die Validität der Systemparameter 41 über einen typischerweise deutlich größeren Arbeitsbereich der Komponente getroffen werden kann. Dadurch wird die Regelung der Komponente beziehungsweise des Energiesystems, insbesondere innerhalb des gesamten Arbeitsbereiches der Komponente, verbessert.

Die als valide erkannten Systemparameter 41 werden anschließend für die modellprädikative Regelung verwendet.

Die Figur 2 zeigt ein Diagramm zur Verdeutlichung einer Konfidenzschranke beziehungsweise eines Konfidenzintervalls für eine Eingangsgröße.

An der Abszisse 100 des dargestellten Diagramms ist die Eingangsgröße, beispielsweise eine exogene Eingangsgröße **v,** in beliebigen Einheiten aufgetragen. An der Ordinate 101 des Diagramms ist die Modellfunktion $\eta$, insbesondere der Wirkungsgrad und/oder die Leistungszahl der Komponente, in beliebigen Einheiten aufgetragen.

Die funktionale Abhängigkeit der Modellfunktion, insbesondere des Wirkungsgrades, von der Eingangsgröße ist durch die Kurve 10 dargestellt. Somit wird die Modellfunktion ebenfalls mit dem Bezugszeichen 10 gekennzeichnet.

Die Eingangsgröße weist einen minimalen und maximalen Wert auf, die die Grenzen eines Arbeitsbereiches 24 der Komponente ausbilden. Mit anderen Worten nimmt die Eingangsgröße über den Betrieb der Komponente die Werte innerhalb des Arbeitsbereiches 24 an.

Bei einer automatischen Parameteridentifikation, bei welcher Systemparameter zur Parametrisierung der Modellfunktion 10, identifiziert und/oder ermittelt und/oder bestimmt werden, werden die Systemparameter über einen festgelegten Wertebereich 22 der Eingangsgröße identifiziert beziehungsweise ermittelt beziehungsweise bestimmt. Alternativ und/oder ergänzend liegen die Messdaten der Eingangsgröße innerhalb eines Trainingsdatenbereiches 23 und nicht innerhalb des festgelegten Wertebereiches 22 vor, wobei der Wertebereich 22 bevorzugt kleiner als der gesamte Arbeitsbereich 24 der Komponente ist. In diesem Sinne werden die Systemparameter lokal bestimmt und es ist grundsätzlich fraglich, ob die lokal bezüglich der Werte der Eingangsgröße bestimmten Systemparameter über den gesamt möglichen Wertebereich der Eingangsgröße (Arbeitsbereich 24) extrapoliert werden können.

Beispielsweise ist die Eingangsgröße eine Umgebungstemperatur (oder Außentemperatur) der Komponente. Ist bekannt, dass die Umgebungstemperatur in den kommenden zwei Wochen im Bereich von 10 Grad Celsius bis 25 Grad Celsius liegt, und/oder liegen nur für diesen Temperaturbereich mittels einer Prognose synthetisch erzeugte Messdaten vor, so wurden die Systemparameter der Modellfunktion der Komponente lediglich innerhalb dieses Temperaturbereiches festgelegt. Es ist somit fraglich, ob das basierend auf diesen Wertebereich parametrisierte Modell, das heißt die Systemparameter, für eine Temperatur außerhalb des genannten Temperaturbereiches, beispielsweise für eine Umgebungstemperatur im Bereich von 0 Grad Celsius bis 5

Grad Celsius, die während des Betriebs der Komponente zufällig auftreten kann, valide sind. Das aus dem Stand der Technik bekannte Verfahren zur Validierung mittels RSME vermag dieses technische Problem nicht zu lösen.

Die vorliegende Erfindung löst das genannte technische Problem mittels einer erfindungsgemäß berechneten Konfidenzschranke 42. Die Konfidenzschranke 42 beziehungsweise das Konfidenzintervall ist in der Figur 2 durch die zwei die Modellfunktion 10 begrenzenden Kurven dargestellt. Es ist zu erkennen, dass außerhalb des Wertebereiches 22 der Eingangsgröße die Konfidenzschranken 42 (obere und untere Konfidenzschranke 42) beziehungsweise das Konfidenzintervall größer wird. Das spiegelt die Unsicherheit der Systemparameter beziehungsweise des parametrisierten Modells außerhalb des Wertbereiches 22, welcher zur Ermittlung der Systemparameter herangezogen wurde, wider.

Gemäß der vorliegenden werden die Systemparameter als valide erkannt, wenn der Quotient aus Konfidenzschranke 42 und Modellfunktion 10 innerhalb des für die Eingangsgröße festgelegten Wertebereiches 22 kleiner gleich einem festgelegten Schwellenwert ist. Dadurch kann eine ausreichende Sicherheit für das Modell außerhalb des Wertebereiches 22 und für den Arbeitsbereich 24 der Komponente erreicht werden.

Bezugszeichenliste

P        Parameteridentifikation
P1       erster Schritt der Parameteridentifikation
P2       zweiter Schritt der Parameteridentifikation
P3       dritter Schritt der Parameteridentifikation
10       Modellfunktion
22       Wertebereich
23       Trainingsdatenbereich
24       Arbeitsbereich
40       Messwerte

41      Systemparameter
42      Konfidenzschranke
100     Abszisse
101     Ordinate

**Patentansprüche**

1.  Computergestütztes Verfahren zur Validierung von mittels Messdaten ermittelten Systemparametern (41) für eine Modellfunktion $\eta$ (10) wenigstens einer Komponente eines Energiesystems, wobei die Modellfunktion $\eta$ (10) wenigstens eine Abhängigkeit wenigstens einer Ausgangsgröße der Komponente von wenigstens einer Eingangsgröße der Komponente unter Berücksichtigung der Systemparameter (41) kennzeichnet, **gekennzeichnet durch** die Schritte:

    - Berechnen einer Standardabweichung der aus den Messdaten ermittelten Systemparameter (41);
    - Berechnen einer Konfidenzschranke $\psi$ (42) in Abhängigkeit der berechneten Standardabweichung; und
    - Festlegen der Systemparameter (41) als valide, wenn der Quotient aus Konfidenzschranke $\psi$ (42) und Modellfunktion $\eta$ (10) innerhalb eines für die Eingangsgröße festgelegten Wertebereiches (22) kleiner gleich einem festgelegten Schwellenwert $\delta$ ist.

2.  Computergestütztes Verfahren gemäß Anspruch 1, **gekennzeichnet dadurch, dass** der Wertebereich (22) kleiner als ein Arbeitsbereich (24) der Komponente festgelegt wird.

3.  Computergestütztes Verfahren gemäß Anspruch 1 oder 2, **gekennzeichnet dadurch, dass** die Standardabweichung mittels einer Kovarianzmatrix $\Sigma_\theta$ der aus den Messdaten ermittelten Systemparameter (41) berechnet wird.

4.  Computergestütztes Verfahren gemäß Anspruch 3, **gekennzeichnet dadurch, dass** die Kovarianzmatrix mittels $\Sigma_\theta = \mathbf{E[}(\theta - \mathrm{E}(\theta)) \cdot (\theta - \mathrm{E}(\theta))^{\mathrm{T}}]$ berechnet wird, wobei $\theta$ den Vektor der Systemparameter (41) und $\mathbf{E}$ den Erwartungswert kennzeichnet.

5.  Computergestütztes Verfahren gemäß einem der vorhergehenden Ansprüche, **gekennzeichnet dadurch, dass**

    die Standardabweichung mittels $\sigma_\eta = \sqrt{(\nabla_{\boldsymbol{\theta}}\eta)^{\mathrm{T}} \cdot \Sigma_{\boldsymbol{\theta}} \cdot \nabla_{\boldsymbol{\theta}}\eta}$ berechnet wird.

6.  Computergestütztes Verfahren gemäß einem der vorhergehenden Ansprüche, **gekennzeichnet dadurch, dass** die Konfidenzschranke (42) mittels des Produktes eines Wertes der studentschen t-Verteilung und der Standardabweichung berechnet wird.

7.  Computergestütztes Verfahren gemäß Anspruch 6, **gekennzeichnet dadurch, dass** die Konfidenzschranke (42) mittels $\psi = K \cdot t_{1-\alpha/2} \cdot \sigma_\eta$ berechnet wird, wobei $t_{1-\alpha/2}$ den Wert der studentschen t-Verteilung zu einem Signifikanzniveau $\alpha$ bezeichnet und $K$ eine Konstante größer Null ist.

8.  Computergestütztes Verfahren gemäß einem der vorhergehenden Ansprüche, **gekennzeichnet dadurch, dass** die Systemparameter (41) als valide festgelegt werden, falls $\psi/\eta \leq \delta$ ist.

9.  Computergestütztes Verfahren gemäß Anspruch 8, **gekennzeichnet dadurch, dass** der Schwellenwert $\delta$ zwischen 0 und 0.1 festgelegt wird.

10. Computergestütztes Verfahren gemäß einem der vorhergehenden Ansprüche, **gekennzeichnet dadurch, dass** zur Validierung der Systemparameter (41) Nebenbedingungen der Systemparameter (41) und/oder Nebenbedingungen der Modellfunktion (10) berücksichtigt werden.

11. Verfahren zum Betrieb eines Energiesystems, beim dem das Energiesystem wenigstens teilweise mittels einer modellprädikativen Regelung basierend auf wenigstens einer Modellfunktion (10) wenigstens einer Komponente des Energiesystems geregelt wird, **gekennzeichnet dadurch, dass** der modellprädikativen Regelung zugrundeliegende Systemparameter (41) der Modellfunktion (10) mittels des Verfahrens gemäß einem der vorhergehenden Ansprüche als valide für die Regelung festgelegt werden.

**12.** Verfahren gemäß Anspruch 11, **gekennzeichnet dadurch, dass** die Systemparameter (41) aus Messdaten des Energiesystems ermittelt werden.

**13.** Verfahren gemäß Anspruch 12, **gekennzeichnet dadurch, dass** die Messdaten automatisiert basierend auf erfassten Messwerten (40) ermittelt werden.

**14.** Verfahren gemäß Anspruch 13, **gekennzeichnet dadurch, dass** die Messwerte (40) zum Ermitteln der Messdaten aufbereitet, insbesondere gefiltert werden.

**15.** Energiemanagementsystem für ein Energiesystem, umfassend eine Messeinheit und eine Recheneinheit, wobei mittels der Messeinheit mehrere Messerwerte (40) bezüglich Systemparametern (41) der wenigstens einer Komponente des Energiesystems erfassbar und zugehörige Messdaten bereitstellbar sind, **dadurch gekennzeichnet, dass** die Recheneinheit zur Durchführung des Verfahrens gemäß einem der vorhergehenden Ansprüche ausgebildet ist.

## Claims

**1.** Computer-aided method for validating system parameters (41) which have been ascertained by means of measurement data and which serve for a model function $\eta$ (10) of at least one component of an energy system, wherein the model function $\eta$ (10) characterizes at least one dependence of at least one output variable of the component on at least one input variable of the component taking into account the system parameters (41), **characterized by** the steps of:

- calculating a standard deviation of the system parameters (41) ascertained from the measurement data;
- calculating a confidence bound $\psi$ (42) on the basis of the calculated standard deviation; and
- defining the system parameters (41) as valid if the ratio of confidence bound $\psi$ (42) to model function $\eta$ (10) is less than or equal to a defined threshold $\delta$ within a value range (22) that has been defined for the input variable.

**2.** Computer-aided method according to Claim 1, **characterized in that** the value range (22) is defined to be smaller than a working range (24) of the component.

**3.** Computer-aided method according to Claim 1 or 2, **characterized in that** the standard deviation is calculated by means of a covariance matrix $\Sigma_\theta$ of the system parameters (41) that were ascertained from the measurement data.

**4.** Computer-aided method according to Claim 3, **characterized in that** the covariance matrix is calculated by means of $\Sigma_\theta = \mathbf{E}[(\theta - \mathbf{E}(\theta)) \cdot (\theta - \mathbf{E}(\theta))^\mathbf{T}]$, where $\theta$ denotes the vector of the system parameters (41) and $\mathbf{E}$ denotes the expected value.

**5.** Computer-aided method according to any one of the preceding claims, **characterized in that** the standard deviation is calculated by means of $\sigma_\eta = \sqrt{(\nabla_\theta \eta)^\mathrm{T} \cdot \Sigma_\theta \cdot \nabla_\theta \eta}$ .

**6.** Computer-aided method according to any one of the preceding claims, **characterized in that** the confidence bound (42) is calculated by means of the product of a value of the Student's t-distribution and the standard deviation.

**7.** Computer-aided method according to Claim 6, **characterized in that** the confidence bound (42) is calculated by means of $\psi = K \cdot t_{1-\alpha/2} \cdot \sigma_\eta$, where $t_{1-\alpha/2}$ denotes the value of the Student's t-distribution at a significance level $\alpha$ and $K$ is a constant greater than zero.

**8.** Computer-aided method according to any one of the preceding claims, **characterized in that** the system parameters (41) are defined as valid if $\psi / \eta \leq \delta$.

**9.** Computer-aided method according to Claim 8, **characterized in that** the threshold $\delta$ is set between 0 and 0.1.

**10.** Computer-aided method according to any one of the preceding claims, **characterized in that** constraints of the system parameters (41) and/or constraints of the model function (10) are taken into account for the purposes of validating the system parameters (41).

11. Method for operating an energy system in which the energy system is controlled at least in part by means of a closed-loop model-predictive control on the basis of at least one model function (10) of at least one component of the energy system, **characterized in that** system parameters (41) of the model function (10) on which the closed-loop model-predictive control is based are defined to be valid for the closed-loop control by means of the method according to any one of the preceding claims.

12. Method according to Claim 11, **characterized in that** the system parameters (41) are ascertained from measurement data of the energy system.

13. Method according to Claim 12, **characterized in that** the measurement data are ascertained in automated fashion on the basis of captured measurement values (40).

14. Method according to Claim 13, **characterized in that** the measurement values (40) are prepared, in particular filtered, for the purposes of ascertaining the measurement data.

15. Energy management system for an energy system, comprising a measuring unit and a computing unit, wherein a plurality of measurement values (40) in respect of system parameters (41) of the at least one component of the energy system are able to be captured and associated measurement data are able to be provided by means of the measuring unit, **characterized in that** the computing unit is designed to carry out the method according to any one of the preceding claims.

**Revendications**

1. Procédé assisté par ordinateur de validation de paramètres (41) de système, déterminé au moyen de données de mesure, d'une fonction $\eta$ (10) de modèle, d'au moins un composant d'un système d'énergie, dans lequel la fonction $\eta$ (10) de modèle caractérise au moins une dépendance d'au moins une grandeur de sortie du composant à au moins une grandeur d'entrée du composant, en tenant compte des paramètres (41) du système, **caractérisé par** les stades :

   - on calcule un écart-type des paramètres (41) du système déterminé à partir des données de mesure ;
   - on calcule une limite $\psi$ (42) de confiance, en fonction de l'écart-type calculé ; et
   - on établit que les paramètres (41) du système sont valides, si le quotient de la limite $\psi$ (42) de confiance par la fonction $\eta$ (10) du modèle est dans une plage (22) de valeur, fixée pour la grandeur d'entrée, inférieure ou égale à une valeur $\delta$ de seuil fixée.

2. Procédé assisté par ordinateur suivant la revendication 1, **caractérisé en ce que** l'on fixe la plage (22) de mesure à une valeur inférieure à une plage (24) de travail du composant.

3. Procédé assisté par ordinateur suivant la revendication 1 ou 2, **caractérisé en ce que** l'on calcule l'écart-type au moyen d'une matrice $\Sigma_\theta$ de covariance des paramètres (41) du système déterminés à partir des données de mesure.

4. Procédé assisté par ordinateur suivant la revendication 3, **caractérisé en ce que** l'on calcule la matrice de covariance au moyen de $\Sigma_\theta = \mathbf{E}[(\theta\text{-}\mathbf{E}(\theta))\cdot(\theta\text{-}\mathbf{E}(\theta))^\mathbf{T}]$, $\theta$ caractérisant le vecteur des paramètres (41) du système et $\mathbf{E}$ la valeur attendue.

5. Procédé assisté par ordinateur suivant l'une des revendications précédentes, **caractérisé en ce que** l'on calcule l'écart-type au moyen de $\sigma_\eta = \sqrt{(\nabla_\theta\eta)^T\cdot\Sigma_\theta\nabla_\theta\eta}$ .

6. Procédé assisté par ordinateur suivant l'une des revendications précédentes, **caractérisé en ce que** l'on calcule la limite (42) de confiance au moyen du produit d'une valeur de la répartition en t de Student par l'écart-type.

7. Procédé assisté par ordinateur suivant la revendication 6, **caractérisé en ce que** l'on calcule la limite (42) de confiance au moyen de $\psi = K\cdot t_{1-\alpha/2}\sigma_\eta$ , $t_{1-\alpha/2}$ caractérisant la valeur de la répartition en t de Student à un niveau $\alpha$

de signification, et **K** étant une constante supérieure à zéro.

8. Procédé assisté par ordinateur suivant l'une des revendications précédentes, **caractérisé en ce que** l'on établit les paramètres (41) du système comme valides, si $\psi / \eta \leq \delta$.

9. Procédé assisté par ordinateur suivant la revendication 8, **caractérisé en ce que** l'on fixe la valeur $\delta$ de seuil entre 0 et 0,1.

10. Procédé assisté par ordinateur suivant l'une des revendications précédentes, **caractérisé en ce que** pour la validation des paramètres (41) du système, on prend en compte des contraintes des paramètres (41) du système et/ou des contraintes de la fonction (10) modèle.

11. Procédé pour faire fonctionner un système d'énergie, dans lequel on régule le système d'énergie au moins en partie au moyen d'une régulation prédictive par modèle, reposant sur au moins une fonction (10) de modèle d'au moins un composant du système d'énergie, **caractérisé en ce que** l'on établit comme valide pour la régulation le paramètre (41) du système, à la base de la régulation prédictive par modèle de la fonction (10) de modèle, au moyen du procédé suivant l'une des revendications précédentes.

12. Procédé suivant la revendication 11, **caractérisé en ce que** l'on détermine les paramètres (41) du système à partir de données de mesure du système d'énergie.

13. Procédé suivant la revendication 12, **caractérisé en ce que** l'on détermine les données de mesure de manière automatisée sur la base des valeurs (40) de mesure détectées.

14. Procédé suivant la revendication 13, **caractérisé en ce que** l'on traite, en particulier on filtre, les valeurs (40) de mesure pour la détermination des données de mesure.

15. Système de gestion d'énergie pour un système d'énergie, comprenant une unité de mesure et une unité de calcul, dans lequel, au moyen de l'unité de mesure, plusieurs valeurs (40) de mesure concernant des paramètres (41) du système du au moins un composant du système d'énergie peuvent être détectées, et des données de mesure associées peuvent être mises à disposition, **caractérisé en ce que** l'unité de calcul est constituée pour effectuer le procédé suivant l'une des revendications précédentes.

## FIG 1

## FIG 2

**IN DER BESCHREIBUNG AUFGEFÜHRTE DOKUMENTE**

**In der Beschreibung aufgeführte Patentdokumente**

- DE 19841165 A1